Europäisches Patentamt

**European Patent Office**

Office européen des brevets

(19)

(11) Numéro de publication: **0 013 383**
**B1**

(12) **FASCICULE DE BREVET EUROPEEN**

(45) Date de publication du fascicule du brevet: **14.07.82**

(21) Numéro de dépôt: **79105229.3**

(22) Date de dépôt: **17.12.79**

(51) Int. Cl.³: **H 02 P 3/08,** H 02 P 3/14, B 60 L 7/22

(54) Dispositif électronique d'alimentation d'un moteur à courant continu à excitation série permettant la transition rapide traction-freinage en génératrice et réciproquement.

(30) Priorité: **22.12.78 FR 7836138**

(43) Date de publication de la demande:
**23.07.80 Bulletin 80/15**

(45) Mention de la délivrance du brevet:
**14.07.82 Bulletin 82/28**

(84) Etats contractants désignés:
**BE CH DE FR GB IT NL SE**

(56) Documents cités:
**FR - A - 2 243 547**
**FR - A - 2 399 155**
**US - A - 3 753 059**

(73) Titulaire: **ALSTHOM-ATLANTIQUE Société anonyme dite:**
**38, Avenue Kléber**
**F-75784 Paris Cedex 16 (FR)**

(72) Inventeur: **Huber André**
**71 Boulevard des Etats-Unis**
**F-78110 Le Vesinet (FR)**
Inventeur: **Muller, Alain**
**12 avenue Mazarin Bât A**
**F-91380 Chilly-Mazarin (FR)**
Inventeur: **Soffer, Jacques**
**43 rue Pasteur**
**F-92330 Sceaux (FR)**

(74) Mandataire: **Weinmiller, Jürgen et al,**
**Zeppelinstrasse 63**
**D-8000 München 80 (DE)**

Courier Press, Leamington Spa, England.

Dispositif électronique d'alimentation d'un moteur à courant continu à excitation série permettant la transition rapide traction-freinage en génératrice et réciproquement

La présente invention concerne un dispositif électronique d'alimentation d'un moteur à courant continu, à excitation série, qui permet un passage quasiment instantané de la configuration traction en moteur à la configuration freinage en génératrice et réciproquement sans nécessiter l'utilisation d'un appareil électromécanique.

On sait que la transition traction-freinage peut être obtenue soit par inversion de la polarité aux bornes de l'induit soit par inversion du courant d'induit. Dans ce dernier cas la polarité aux bornes du moteur garde le même, sens, de même que le flux dans les pôles principaux. Pour opérer la transition, il s'agit donc d'inverser le courant d'induit par rapport au flux généré par l'inducteur.

L'alimentation des moteurs de traction est réalisée soit à traverse un rhéostat de démarrage, soit par l'intermédiaire d'un circuit électronique comportant un hacheur dont l'allumage et l'excitation se font sur commande. Jusqu'à maintanant il était nécessaire de contrôler l'annulation du courant moteur pour autoriser la transition traction-freinage (ou réciproquement) car cette transition qui se faisait par l'intermédiaire de contacteurs (ou de thyristors insérés directement dans le circuit moteur) ne pouvait avoir lieu que lorsque le courant moteur était annulé. Dans les systèmes classiques la transition était réalisée à la suite d'un délai de trois à quatre secondes.

La présente invention a pour but de concevoir un dispositif d'alimentation d'un moteur excitation série, entièrement électronique, dans lequel l'ordre de transition de traction en freinage ou de freinage en traction est exécuté quasi immédiatement (délai de l'ordre de la milliseconde).

La présente invention à pour objet un dispositif électronique d'alimentation d'un moteur à courant continu à excitation série, caractérisé en ce qu'il comporte entre une borne de polarité positive et une borne de polarité négative d'une source d'alimentation une première branche comprenant dans l'ordre un thyristor de traction, l'enroulement inducteur dudit moteur, cet enroulement ayant en parallèle à ses bornes une première diode de roue libre et un thyristor de shuntage montés tête-bêche, un hacheur principal, une diode de traction, l'induit dudit moteur et en dérivation sur ladite diode de traction et ledit induit un thyristor de freinage, les anodes desdits thyristor, dudit hacheur et de la diode de, traction étant du côté de ladite borne positive, et qu'il comporte en outre und deuxième branche comportant dans l'ordre une diode de récupération et une seconde diode de roue libre, les cathodes desdites diodes de récupération et de roue libre étant du côté de ladite borne positive, l'anode de la diode de récupération étant reliée d'une part, à la cathode de ladite diode de traction, d'autre part, à la cathode dudit thyristor de traction par l'intermédiaire d'une diode de freinage dont l'anode est reliée à l'anode de ladite diode de récupération.

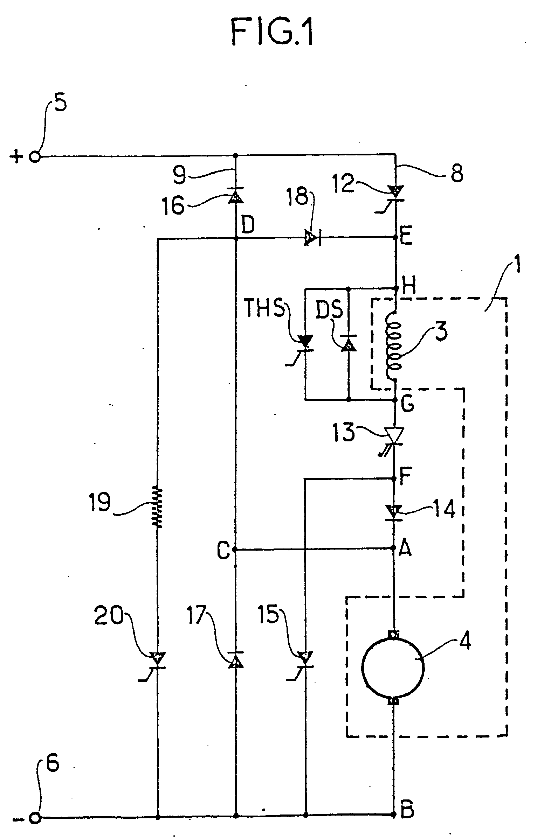

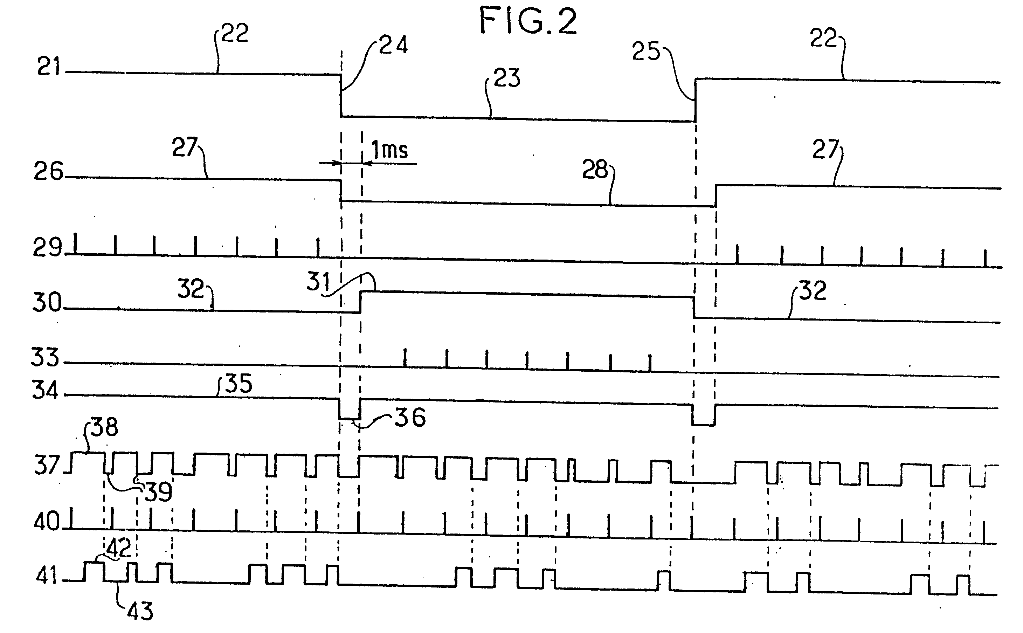

L'invention sera mieux comprise à l'étude de l'exemple donné ci-après en référence au dessin annexé dans lequel la figure 1 représente un schéma électronique du dispositif d'alimentation selon l'invention et la figure 2 représente un graphique des différents ordres donnés aux différents composants commandés ainsi que leurs états.

Comme on le voit sur la figure 1, il s'agit de l'alimentation d'un moteur 1 à courant continu à excitation série comprenant un inducteur 3 en série avec l'induit 4 du moteur. Le moteur 1 fonctionne en tant que moteur au cas où il est utilisé en traction et en tant que génératrice au cas où il est utilisé en freinage. En traction et en freinage, l'inducetur 3 est toujours parcouru dans le même sens. Par contre, le courant doit parcourir l'induit 4 dans un certain sens en traction et dans le sens inversé en freinage.

En liaison avec la ligne d'alimentation, des bornes 5 (positive) et 6 (négative) fournissent le potentiel servant à l'alimentation du moteur en traction ou au contraire servant à renvoyer l'énergie en provenance du moteur 1 fonctionnant en génératrice dans le cas du freinage par récupération.

En dérivation sur les bornes 5 et 6 il existe une première branche 8 et une deuxième branche 9. La première branche 8 comporte un thyristor de traction 12 dont l'anode est reliée à la borne 5 et la cathode à un point référence E lui-même relié à un point H, l'une des extrémités de l'inducteur 3; ensuite l'inducteur 3 comportant en parallèle sur ses extrémités H et G une diode de roue libre DS et un thyristor de shuntage THS montés tête-bêche, le thyristor THS, étant disposé dans le même sens que le thyristor de traction 12; ensuite un hacheur principal 13 dont le thyristor principal est disposé dans le même sens que le thyristor de traction 12; ensuite une diode de traction 14 disposée dans le même sens que le thyristor de traction 12 et séparée du hacheur principal 13 par le point commun F; ensuite l'induit 4 du moteur 1. Le point commun de la diode de traction 14 et de l'induit 4 est le point A. Le point B est la borne de l'induit 4 qui est en liaison avec la borne négative 6. En dérivation sur FB est disposée une connexion comportant un thyristor de freinage 15 dont l'anode est reliée à F.

Le but du thyristor de shuntage THS est de court-circuiter l'inducteur 3 afin de diminuer l'excitation du moteur 1 et par conséquent d'augmenter sa vitesse. Le thyristor de shuntage THS est étient lorsque le hacheur principal 13 est éteint.

Le thyristor de shuntage THS est utilisé au cas de la non conduction totale du hacheur principal 13. Au cas de la conduction à 100% du hacheur principal 13 le thyristor de shuntage THS doit être remplacé par un deuxième hacheur.

La branche 9 comporte une diode de récupération 16 et une diode de roue libre 17 dont les cathodes sont du côte de la borne positive 5.

Dans la connexion entre la cathode de la diode de roue libre 17 et l'anode de la diode de récupération 16 sont disposés deux points C et D, le point C étant relié au point A de la branche 8 et le point D étant relié à l'anode d'une diode de freinage 18 dont la cathode est reliée au point E de la branche 8.

Le système décrit jusqu'ici permet le fonctionnement du moteur en traction et en freinage par récupération. Pour le· freinage rhéostatique, il peut être adjoint entre le point D et la borne 6 des résistances de freinage 19 en série avec un thyristor de freinage rhéostatique 20.

Le principe de fonctionnement est le suivant:

Dans tous les cas, que ce soit en traction ou en freinage, le courant dans l'inducteur 3 du moteur circule toujours dans le même sens et son alimentation est régulée par le thyristor THS et la diode de roue libre DS.

Dans le cas de la traction, le thyristor de traction 12 reçoit des impulsions d'allumage sur sa gâchette alors que le thyristor de freinage 15 n'en reçoit pas. Le hacheur principal 13 reçoit des ordres successifs de laisser passer le courant ou de l'arrêter. Le thyristor de shuntage THS reçoit ou ne reçoit pas des impulsions d'allumage. Lorsqu'en traction, le hacheur principal 13 conduit, le courant vient de la borne 5, passe par le thyristor de traction 12, l'enroulement série 3, le hacheur 13, la diode de traction 14 et l'induit 4 du moteur pour se refermer sur la borne 6.

Dans l'induit 4 on remarque que le courant suit le sens de A vers B. Toujours en traction, lorsque le hacheur principal 13 s'étient, le thyristor de traction 12 ne conduit plus ainsi que le thyristor de shuntage THS s'il était conducteur. Il ne peut y avoir coupure brutale ni dans l'induit 4 ni dans l'inducteur 3; les courants respectifs ont tendance à diminuer et un circuit est prévu pour les boucler sur eux-mêmes par la diode de roue libre 17 et la diode de roue libre DS respectivement.

Dans le cas du freinage par récupération, le thyristor de freinage 15 reçoit des impulsions d'allumage sur la gâchette et le thyristor de traction 12 ne reçoit pas d'impulsions d'allumage sur la sienne. Le hacheur principal 13 reçoit des ordres de passage ou de blocage et le thyristor de shuntage THS reçoit ou ne reçoit pas des impulsions d'allumage.

Lorsqu'en freinage par récupération le hacheur principal 13 n'est pas conducteur, le courant en provenance de la borne 6 parcourt l'induit 4 du moteur dans le sens de B vers A, puis des connexions AC, CD, puis la diode de récupération 16 avant de se refermer sur la borne 5. Ainsi le courant de récupération circule en sens inverse dans l'induit pendant que le courant de l'inducteur 3 circule toujours dans le même sens de H vers G, mais se refermant tout de suite dans la diode de roue libre DS.

Lorsqu'en freinage par récupération, le hacheur principal est conducteur, le moteur se trouve en état de court-circuit et le courant de l'induit va de B vers A, emprunte C, D, la diode de freinage 18, E, l'inducteur 3, le hacheur 13, F, le thyristor de freinage 15 et se referme en B. Lorsque le courant a atteint une valeur suffisante, on coupe le hacheur 13, le courant s'annule par conséquent dans la diode de freinage 18 et le thyristor de freinage 15 et circule à nouveau avec la valeur voulue dans la diode de récupération 16, pendant que le courant de l'inducteur 3 se referme dans sa diode de roue libre DS.

Dans le cas où l'équipement ne pourrait pas · récupérer en ligne, on allume le thyristor de freinage rhéostatique 20. Alors le courant provenant de l'induit du moteur emprunte A, C, D, la résistance 19, le thyristor 20 pour venir se boucler en B.

Le passage traction-freinage est quasi instantané, car dès que l'on éteint le hacheur 13, le thyristor de traction 12 et le thyristor de shuntage THS (dans le cas où il était conducteur), s'éteignent et il suffit d'attendre environ 1 ms pour réallumer le hacheur 13 et le courant dans l'induit 4 se sera inversé. Aucune mesure particulière ne devra être prise, sauf d'attendre 1 ms étant donné que le thyristor de traction 12 empêche le freinage.

Le passage freinage-traction est également rapide, le thyristor de freinage 15 est bloqué par le hacheur 13 et par conséquent, 1 ms après, on peut commencer à passer en traction. La traction sera effective dès que le courant de freinage se sera annulé.

Le principe de verrouillage entre le thyristor de traction 12 et le thyristor de freinage 15 est identique à celui décrit dans le brevet Français 77 23430 (FR—A—2399155) afin d'éviter le même type de court-circuit entre les bornes 5 et 6, dans le cas où le thyristor de shuntage THS est allumé.

Sur la figure 2 on voit une représentation 21 de l'état traction (niveau haut 22) et de l'état freinage (niveau bas 23) la discontinuité 24 représente l'ordre de passage en freinage; la discontinuité 25 représente l'ordre de passage en traction.

Le graphique 26 représente dans son niveau haut 27 l'autorisation d'allumage du thyristor de traction 12 et dans son niveau bas 28 l'interdiction d'allumage du thyristor de traction 12.

Les impulsions 26 représentent les impulsions d'allumage envoyées sur la gâchette du thyristor de traction 12. Le graphique 30 représente dans son niveau haut 31 l'autorisation d'allumage du thyristor de freinage 15 et dans son niveau bas 32 l'interdiction d'allumage du thyristor de freinage 15.

Les impulsions 33 représentent les impulsions d'allumage envoyées sur la gâchette du thyristor de freinage 15.

Le graphique 34 représente dans son niveau haut 35 l'autorisation de conduction du hacheur principal 13 et dans son niveau bas 36 l'interdiction de conduction du hacheur principal 13. La durée de 36 est de l'ordre d'une milliseconde permettant la transition traction-freinage ou freinage-traction.

La référence 37, représente l'état de conduction du hacheur principal 13, le niveau haut 38 signifiant que le hacheur 13 conduit, le niveau bas 39 signifiant que le hacheur 13 est bloqué.

Les impulsions 40 sont des impulsions d'horloge espacées de une à trois millisecondes servant à commander la conduction du hacheur principal ainsi que la synchronisation des impulsions 29 et 33.

La référence 41, représente l'état de conduction du thyristor de shuntage THS, le niveau haut 42 signifiant que le thyristor THS conduit, le niveau bas 43 signifiant que le thyristor THS est bloqué. On peut remarquer que le thyristor THS est éteint en même temps que le hacheur principal 13.

Il peut être allumé en même temps que le hacheur principal ou plus tard ou ne pas recevoir d'ordre d'allumage pendant l'allumage du hacheur principal.

Le début de l'état 36 d'interdiction de conduction du hacheur principal 13 est commandé par l'ordre de passage en freinage 24 ou l'ordre de passage en traction 25. La cessation de l'état bloqué 39 du hacheur 13 ne peut être commandée par l'impulsion 40 si celleci est comprise pendant la durée du créneau 36.

Le thyristor de freinage 15 n'est allumé qu'à deux conditions, lorsque sa gâchette en reçoit l'ordre et lorsque le hacheur principal 13 est en état de conduction. Il n'est conducteur qu'en freinage.

Le thyristor de traction 12 n'est allumé aussi qu'à ces deux conditions. Il n'est conducteur qu'en traction.

Le dispositif selon l'invention a en outre le grand avantage de garantir un chemin de bouclage au courant lancé dans le moteur quel que soit son état de fonctionnement, à travers les diodes de roue libre 17 et DS en traction et à travers la diode de récupération 16 en freinage. Il n'y a ainsi aucun risque de surtension dû à une brusque coupure de circuit d'alimentation.

Les applications de l'invention sont du domaine de la traction électrique.

**Revendications**

1. Dispositif électronique d'alimentation d'un moteur à courant continu à excitation série, caractérisé en ce qu'il comporte entre une borne de polarité positive (5) et une borne de polarité négative (6) d'une source d'alimentation une première branche (8) comprenant dans l'ordre un thyristor de traction (12), l'enroulement inducteur (3) dudit moteur, cet enroulement ayant en parallèle à ses bornes une première diode de roue libre (DS) et un thyristor de shuntage (THS) montés tête-bêche, un hacheur principal (13), und diode de traction (14), l'induit (4) dudit moteur et en dérivation sur ladite diode de traction (14) et ledit induit (4) un thyristor de freinage (15), les anodes desdits thyristors (12, THS), dudit hacheur (13) et de la diode de traction (14) étant du côté de ladite borne positive (5), et qu'il comporte en outre une deuxième branche (9) comportant dans l'ordre, une diode de récupération (16) et une seconde diode de roue libre (17), les cathodes desdites diodes de récupération (16) et de roue libre (17) étant du côté de ladite borne positive (5), l'anode de la diode de récupération (16) étant reliée d'une part, à la cathode de ladite diode de traction (14), d'autre part, à la cathode dudit thyristor de traction (12) par l'intermédiaire d'une diode de freinage (18) dont l'anode est reliée à l'anode de ladite diode de récupération (16).

2. Dispositif électronique selon la revendication 1, caractérisé par le fait que ladite deuxième branche (9) comporte en dérivation entre le point commun à l'anode de ladite diode de récupération (16) et l'anode de ladite diode de freinage (18) et ladite borne négative (6) une connexion reliant une résistance de freinage (19) à un thyristor de freinage rhéostatique (20) dont la cathode est reliée à ladite borne de polarité négative (6).

3. Dispositif électronique selon l'une des revendications 1 et 2, caractérisé par le fait que la transition de la configuration traction à la configuration freinage ou réciproquement se fait dans un temps très court, de l'ordre de la milliseconde, l'extinction du thyristor de traction (12) ou de freinage (15) s'obtenant par une interdiction momentanée de conduction du hacheur principal (13) pendant cette durée.

4. Dispositif électronique selon l'une des revendications 1 à 3, caractérisé par le fait que ledit thyristor de shuntage (THS) est éteint lorsque le hacheur principal (13) est éteint.

5. Dispositif électronique selon l'une des revendications 1 à 3 caractérisé en ce qu'un deuxième hacheur est disposé à la place dudit thyristor de shuntage (THS).

**Claims**

1. An electronic supply circuit for a series-excitation DC motor, characterized in that it comprises between a positive terminal (5) and a negative terminal (6) of a supply source a first branch circuit (8) including in series a traction thyristor (12), the induction winding (3) of said motor, this winding having in parallel with its terminals a first free-wheeling diode (DS) and a shunt thyristor (THS) in head to tail configuration, a main chopper (13), a traction diode (14), the armature winding (4) of said motor and in parallel to said traction diode (14) and said armature winding (4) a braking thyristor (15), the anodes of said thyristors (12, THS), said chopper (13) and the traction diode (14) being on the side of said positive terminal (5), and that it further comprises a second branch circuit (9) including in series a regeneration diode (16) and a second free-wheeling diode (17), the cathodes of said regeneration (16) and free-wheeling diodes (17) being on the side of said positive terminal, the anode of the regeneration diode (16) being connected firstly to the cathode of said traction diode (14) and secondly to the cathode of said traction thyristor (12) via a braking diode (18) the anode of which is connected to the anode of said regeneration diode (16).

2. An electric circuit according to claim 1, characterized in that said second branch circuit (9) includes between a common point of the anode of said regeneration diode (16) and the anode of said braking diode (18) and said negative terminal (6) a connection which links a braking resistor (19) to a rheostatic braking thyristor (20) whose cathode is connected to said negative terminal (6).

3. An electronic circuit according to one of the claims 1 and 2, characterized in that the transition from the traction configuration to the braking configuration or vice versa is done in a very short time, in the order of one millisecond, the extinction of the traction thyristor (12) or the braking thyristor (15) being obtained by a momentaneous conduction interdiction of the main chopper (13) during this time.

4. Electronic circuit according to one of the claims 1 to 3, characterized in that said shunt thyristor (THS) is extinguished when the main chopper (13) is extinguished.

5. Electronic circuit according to one of the claims 1 to 3, characterized in that a second chopper replaces said shunt thyristor (THS).

## Patentansprüche

1. Elektronische Schaltungsanordnung zur Speisung eines Reihenschluß-Gleichstrommotors, dadurch gekennzeichnet, daß sie zwischen einer positiven Anschlußklemme (5) und einer negativen Anschlußklemme (6) einer Versorgungsquelle einer ersten Zweig (8) aufweist, der in Reihe einen Zugthyristor (12), die Induktionswicklung (3) des Motors, die parallel zu ihren Klemmen eine Freilauf-Diode (DS) und einen hierzu entgegengesetzt gepolten Shunt-Thyristor (THS) aufweist, einen Hauptzerhacker (13), eine Zugdiode (14), die Ankerwicklung (4) des Motors und parallel zur Zugdiode (14) und zur Ankerwicklung (4) einen Bremsthyristor (15) besitzt, wobei die Anoden der Thyristoren (12, THS), des Zerhackers (13) und der Zugdiode (14) sich auf der Seite der positiven Klemme (5) befinden, und daß sie außerdem einen zweiten Zweig (9) aufweist, der in Reihe eine Rückgewinnungsdiode (16) und eine zweite Freilauf-Diode (17) enthält, wobei die Kathoden dieser Rückgewinnungsdiode (16) und der Freilauf-Diode (17) sich auf der Seite der positiven Klemme (5) befinden und wobei die Anode der Rückgewinnungsdiode (16) einerseits mit der Kathode der Zugdiode (14) und andererseits über eine Bremsdiode (18), deren Anode mit der Anode der Rückgewinnungsdiode (16) verbunden ist, mit der Kathode des Zugthyristors (12) verbunden ist.

2. Elektronische Schaltungsanordnung nach Anspruch 1, dadurch gekennzeichnet, daß der zweite Zweig (9) außerdem zwischen dem gemeinsamen Punkt der Anode der Rückgewinnungsdiode (16) und der Anode der Bremsdiode (18) und der negativen Klemme (6) eine Verbindung aufweist, die einen Bremswiderstand (19) mit einem rheostatischen Bremsthyristor (20) verbindet, dessen Kathode mit der negativen Klemme (6) verbunden ist.

3. Elektronische Schaltungsanordnung nach einem der Ansprüche 1 und 2, dadurch gekennzeichnet, daß der Übergang vom Zugbetrieb zum Bremsbetrieb oder umgekehrt in sehr kurzer Zeit, in der Größenordnung einer Millisekunde geschieht, wobei das Löschen des Zug-(12) oder Bremsthyristors (15) durch ein momentanes Stromführverbot des Hauptzer-hackers (13) während dieser Zeit erhalten wird.

4. Elektronische Schaltungsanordnung nach einem der Ansprüche 1 bis 3, dadurch gekennzeichnet, daß der Shunt-Thyristor (THS) gelöscht ist, wenn der Hauptzerhacker (13) gelöscht ist.

5. Elektronische Schaltungsanordnung nach einem der Ansprüche 1 bis 3, dadurch gekennzeichnet, daß ein zweiter Zerhacker an der Stelle des Shunt-Thyristors (THS) angeordnet ist.

# FIG.1

FIG.2